# EUROPEAN PATENT APPLICATION

(11) **EP 4 030 597 A1**
(43) Date of publication of application: **20.07.2022**
(21) Application number: 20863818.9
(22) Date of filing: 07.09.2020
(51) Int. Cl.: H02K 13/00, H01R 39/00, H01R 39/18

(54) **ELECTRIC MOTOR AND ELECTRICAL APPARATUS**

(30) Priority: 10.09.2019 JP 2019164801
(71) Applicant: Panasonic Intellectual Property Management Co., Ltd., Osaka-shi, Osaka 540-6207 (JP)
(72) Inventor: NAKANO, Keisaku, Osaka-shi, Osaka 540-6207 (JP); ASANO, Takahiro, Osaka-shi, Osaka 540-6207 (JP); YORINO, Tomoko, Osaka-shi, Osaka 540-6207 (JP); TOYA, Kazuo, Osaka-shi, Osaka 540-6207 (JP)
(74) Representative: SSM Sandmair
(86) International application number: PCT/JP2020/033756
(87) International publication number: WO 2021/049453

(57) **Abstract**

An electric motor (1) includes a commutator (30) including commutator segments (31), a first conducting brush (41) and a second conducting brush (42) in contact with the commutator (30), and a first auxiliary brush (51) and a second auxiliary brush (52) in contact with the commutator (30). The first auxiliary brush (51) and the second auxiliary brush (52) are connected to each other via a diode (80). When the first conducting brush (41) separates from one of the commutator segments (31), the first auxiliary brush (51) comes into contact with two commutator segments (31) including the one of the commutator segments (31) and a commutator segment (31) behind the one of the commutator segments (31) in a direction of rotation. When the second conducting brush (42) separates from another commutator segment (31) (commutator segment (31) different from the one of commutator segments (31)), the second auxiliary brush (52) comes into contact with two commutator segments (31) including another commutator segment (31) and a commutator segment (31) behind another commutator segment (31) in the direction of rotation.

## Description

### [Technical Field]

The present disclosure relates to an electric motor and electrical equipment.

### [Background Art]

Electric motors are used in various products, such as the motor fan of a vacuum cleaner. A commutator motor including brushes and a commutator and a brushless motor not including brushes or a commutator are known as electric motors.

The commutator motor includes, for example, a stator, a rotor, a commutator, and conducting brushes. The rotor is rotated by the magnetic force of the stator. The commutator is attached to the rotation shaft of the rotor. The conducting brushes are in slidable contact with the commutator. The commutator includes commutator segments evenly spaced apart in a circumferential direction of the rotation shaft of the rotor. The commutator segments are electrically connected to winding coils wound around a rotor core.

In the commutator motor, the conducting brushes and commutator energize the winding coils wound around the rotor. In this case, when an energizing-target winding coil is changed with rotation of the commutator, a spark may occur between a conducting brush and a commutator segment. Since such sparking accelerates the wear of the conducting brush, the lifespan of the electric motor decreases.

To suppress a spark and extend the lifespan of a conducting brush, a technique of providing an auxiliary brush connected to an electronic component capable of absorbing arc voltage due to sparking has been proposed (e.g., Patent Literature (PTL) 1 and 2). Specifically, in the commutator motors disclosed in PTL 1 and 2, a pair of auxiliary brushes are provided, and a diode is connected between one of the pair and the other of the pair.

### [Citation List]

### [Patent Literature]

[PTL 1] Japanese Unexamined Patent Application Publication No. 8-98485
[PTL 2] Japanese Patent No. 6512981

### [Summary of Invention]

### [Technical Problem]

However, it is difficult to apply the arrangements disclosed in PTL 1 and 2 to an electric motor operated at a high input voltage and having many commutator segments. For instance, the input voltage of the electric motor of a vacuum cleaner may exceed 20 V. However, in such an electric motor operated at a high input voltage exceeding 20 V, it is difficult to suppress a spark by using a pair of auxiliary brushes electrically connected to each other via a diode.

In view of the foregoing, the present disclosure aims to provide an electric motor and electrical equipment including the electric motor, the electric motor being an electric motor capable of effectively suppressing a spark that has occurred between a conducting brush and a commutator segment, by using a pair of auxiliary brushes electrically connected to each other via a diode even if the electric motor is operated at a high input voltage and has many commutator segments.

### [Solution to Problem]

To achieve the aims, an aspect of an electric motor according to the present disclosure includes: a rotor having a rotation shaft; a commutator attached to the rotation shaft; conducting brushes in contact with the commutator; and auxiliary brushes in contact with the commutator. The commutator includes commutator segments provided in a circumferential direction of the rotation shaft. The conducting brushes include a first conducting brush and a second conducting brush. The auxiliary brushes include a first auxiliary brush and a second auxiliary brush. The first auxiliary brush and the second auxiliary brush are electrically connected to each other via a diode. The first auxiliary brush is disposed so that when the first conducting brush separates from one of the commutator segments, the first auxiliary brush comes into contact with at least two commutator segments including the one of the commutator segments and at least one commutator segment behind the one of the commutator segments in a direction of rotation of the rotor. The second auxiliary brush is disposed so that when the second conducting brush separates from another commutator segment among the commutator segments (a commutator segment different from the one of the commutator segment), the second auxiliary brush comes into contact with at least two commutator segments including another commutator segment and at least one commutator segment behind another commutator segment in the direction of rotation of the rotor.

In addition, an aspect of electrical equipment according to the present disclosure is electrical equipment including the above electric motor.

### [Advantageous Effects of Invention]

In the present disclosure, even if input voltage is high and many commutator segments are provided, it is possible to effectively suppress a spark that has occurred between a conducting brush and a commutator segment, by using a pair of auxiliary brushes electrically connected to each other via a diode.

### [Brief Description of Drawings]

[FIG. 1]

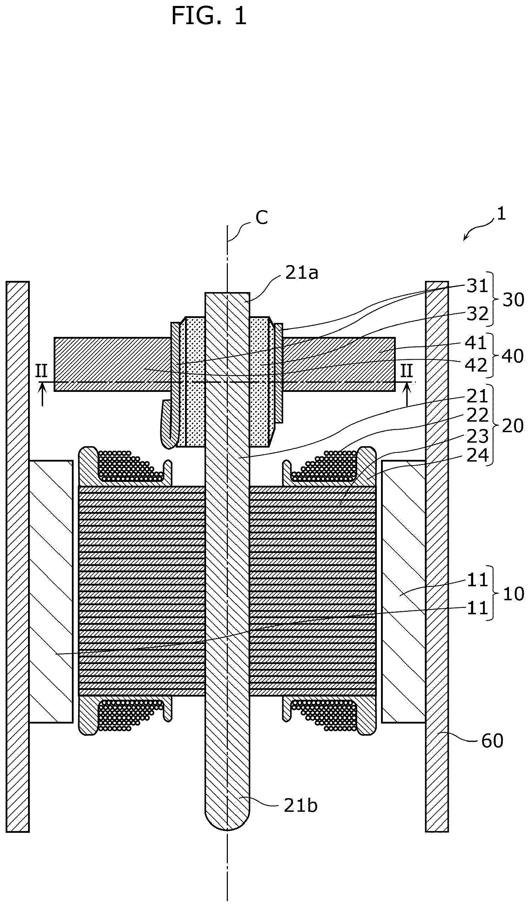

   FIG. 1 is a cross-sectional view of an electric motor according to an embodiment.
[FIG. 2]

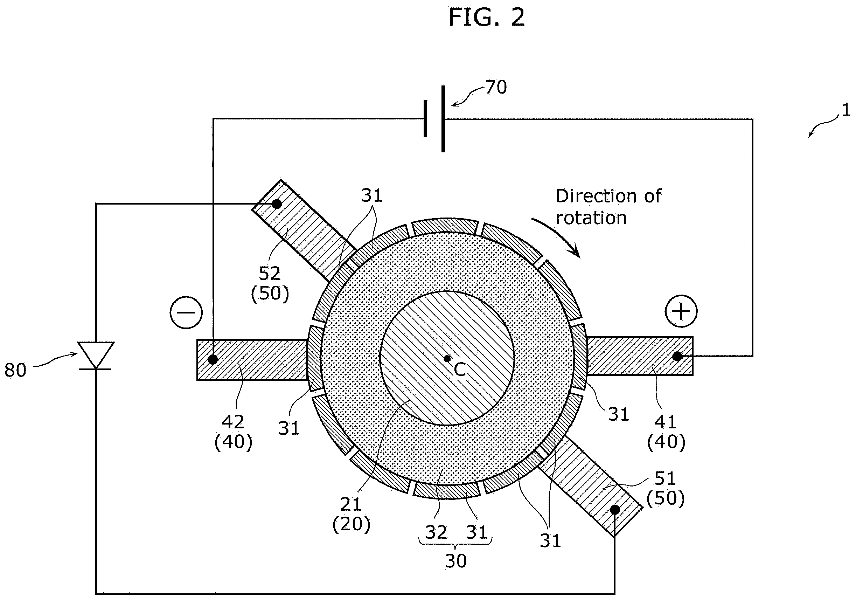

   FIG. 2 is a cross-sectional view of the electric motor according to the embodiment, taken along line II-II in FIG. 1.
[FIG. 3]

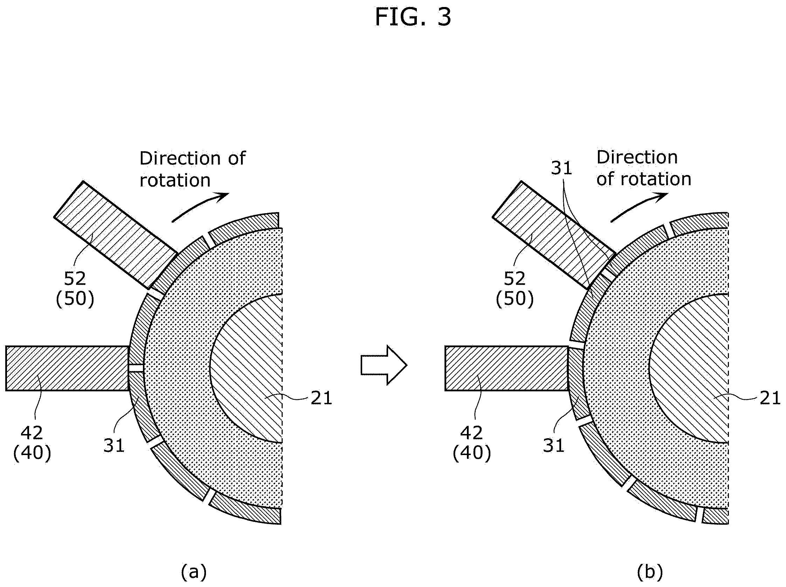

   FIG. 3 illustrates that rotation of a commutator enables sliding contact between a conducting brush and commutator segments.
[FIG. 4]

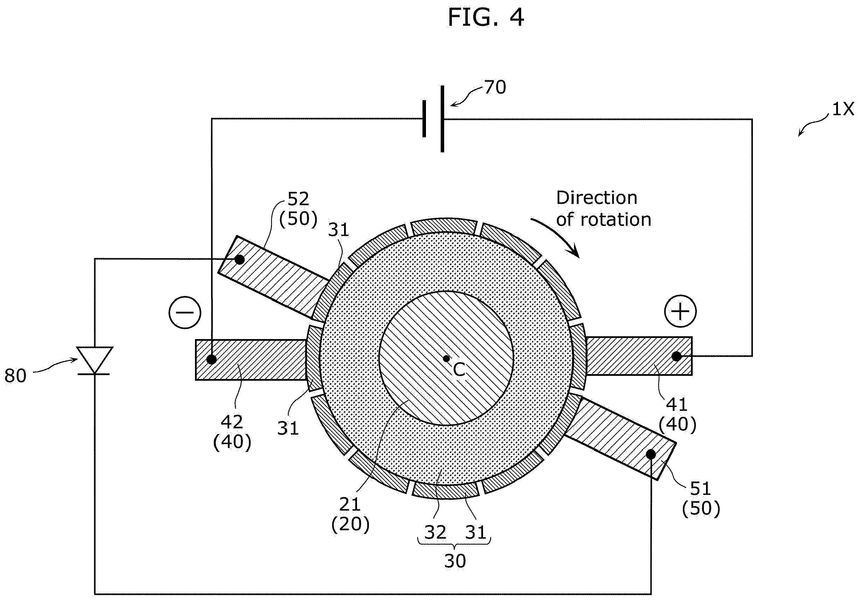

   FIG. 4 is a cross-sectional view of an electric motor in a comparative example cut by a plane passing through conducting brushes and auxiliary brushes.
[FIG. 5]

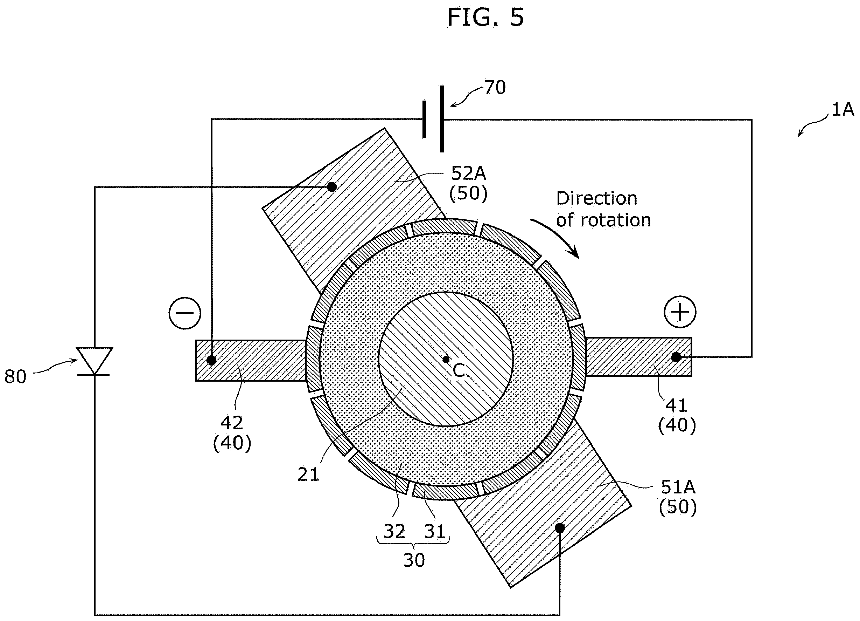

   FIG. 5 is a cross-sectional view of an electric motor according to Variation 1 cut by a plane passing through conducting brushes and auxiliary brushes.
[FIG. 6]

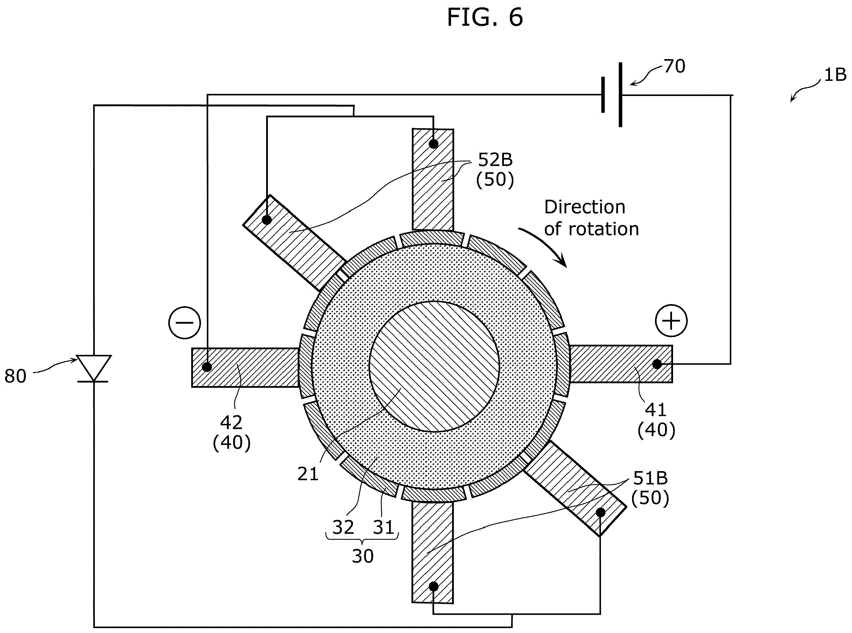

   FIG. 6 is cross-sectional view of an electric motor according to Variation 2 cut by a plane passing through conducting brushes and auxiliary brushes.

### [Description of Embodiments]

Hereinafter, an embodiment of the present disclosure is described with reference to the drawings. It should be noted that the embodiment described below is a specific example of the present disclosure. Thus, for example, the numerical values, shapes, materials, structural elements, arrangements and connections of the structural elements are mere examples and therefore do not limit the present disclosure. Accordingly, among the structural elements described in the embodiment below, the structural elements not recited in the independent claims are described as optional structural elements.

It should be noted that the drawings are schematic views and are not necessarily precisely drawn. In addition, in the drawings, the same reference symbol is assigned to substantially the same structural elements, and overlapping explanations are omitted or simplified.

### (Embodiment)

The overall configuration of electric motor 1 according to an embodiment is described with reference to FIGS. 1 and 2. FIG. 1 is a cross-sectional view of electric motor 1 according to the embodiment. FIG. 2 is a cross-sectional view of electric motor 1 taken along line II-II in FIG. 1 and illustrates a cross section of electric motor 1 cut by a plane passing through conducting brushes 40 and auxiliary brushes 50.

Electric motor 1 is a commutator motor, and as illustrated in FIGS. 1 and 2, electric motor 1 includes stator 10, rotor 20, commutator 30, conducting brushes 40, auxiliary brushes 50, and frame 60. Rotor 20 is rotated by the magnetic force of stator 10. Commutator 30 is attached to shaft 21 of rotor 20. Conducting brushes 40 and auxiliary brushes 50 are in contact with commutator 30. Frame 60 houses stator 10 and rotor 20.

Electric motor 1 in the embodiment is a direct-current (DC) motor powered by direct current and includes magnets 11 as stator 10 and an armature having winding coils 22, as rotor 20.

It should be noted that electric motor 1 in the embodiment can be used in various electrical equipment. For instance, electric motor 1 can be used in the motor fans of, for example, a vacuum cleaner and a hand dryer. Electric motor 1 can also be used in, for example, automotive electrical and electronic equipment and a power tool. Hereinafter, the structural elements of electric motor 1 are described in detail.

Stator 10 generates magnetic force that will act on rotor 20. In stator 10, a north magnetic pole and a south magnetic pole or alternating north and south magnetic poles are present in a circumferential direction of stator 10 on a plane of an air gap between stator 10 and rotor 20. In the embodiment, stator 10 is made up of magnets 11. Magnets 11 are field magnets that generate magnetic flux to produce torque and, for instance, permanent magnets having north and south poles. In a plan view, each magnet 11 is arc-shaped and has a substantially uniform thickness. Magnets 11 are fixed to frame 60.

Magnets 11 of stator 10 are arranged so that a north pole and a south pole are present in the circumferential direction of stator 10 or alternating north and south poles are evenly present in the circumferential direction of stator 10. Thus, the direction of main magnetic flux generated by stator 10 (magnets 11) intersects a direction of shaft axis C of shaft 21. In the embodiment, magnets 11 are evenly spaced apart in the circumferential direction of stator 10 so as to surround rotor 20. Thus, magnets 11 are outside the outer circumference of rotor 20 in the radial direction of rotor core 23 of rotor 20. Specifically, magnets 11 magnetized with north and south poles are disposed so that the magnetic pole center(s) of the north pole(s) and the magnetic pole center(s) of the south pole(s) are evenly spaced apart in the circumferential direction.

Rotor 20 generates magnetic force that will act on stator 10. In the embodiment, the direction of main flux generated by rotor 20 intersects the direction of shaft axis C of shaft 21. Rotor 20 has shaft 21 as a rotation shaft. Rotor 20 is an armature and has winding coils 22 and rotor core 23. In the embodiment, rotor 20 is an inner rotor and is disposed inside stator 10. Specifically, rotor 20 is surrounded by magnets 11 of stator 10. In addition, an airgap is present between rotor 20 and stator 10. Specifically, a very small air gap is present between the periphery of rotor 20 (rotor core 23) and the inner surfaces of magnets 11.

Shaft 21 is a rotation shaft having shaft axis C and a long bar-like component around which rotor 20 rotates. A longitudinal direction of shaft 21 (direction in which shaft 21 extends) is identical to the direction of shaft axis C (shaft-axis direction). Shaft 21 is rotatably held by a bearing. Although details are not illustrated, for instance, first end portion 21a, one of the end portions of shaft 21, is supported by a first bearing held by a bracket fixed to frame 60 or directly held by frame 60. Second end portion 21b, the other end portion of shaft 21, is supported by a second bearing held by a bracket fixed to frame 60 or directly held by frame 60. The brackets are fixed to frame 60 so as to cover the openings of frame 60, for example.

Shaft 21 is fixed to the center of rotor 20. Shaft 21 is, for example, a metal bar and is fixed to rotor core 23, passing through rotor core 23. For instance, shaft 21 is fixed to rotor core 23 by press-fitting or shrink-fitting shaft 21 into the center hole of rotor core 23.

Winding coils 22 (rotor coils) are wound so that magnetic force that will act on stator 10 is generated when a current flows. Winding coils 22 are wound around rotor core 23 with insulator 24 interposed therebetween. Insulator 24 is made of, for example, an insulating resin material and provides electrical insulation between winding coils 22 and rotor core 23. Winding coil 22 is provided for each slot of rotor 20 and electrically connected to commutator 30. Specifically, winding coils 22 are electrically connected to commutator segments 31 of commutator 30.

Rotor core 23 is a stack of magnetic steel sheets stacked in the longitudinal direction of shaft 21. Rotor core 23 has, for example, teeth. Winding coil 22 is wound around each of the teeth. That is, more than one winding coil 22 is provided. It should be noted that rotor core 23 is not limited to a stack of magnetic steel sheets and may be a bulk body made of a magnetic material.

Commutator 30 is attached to shaft 21. Thus, when rotor 20 rotates, commutator 30 rotates together with shaft 21. In the embodiment, commutator 30 is attached to first end portion 21a of shaft 21.

As illustrated in FIG. 2, commutator 30 includes commutator segments 31. Commutator segments 31 are provided in a circumferential direction of shaft 21. Specifically, commutator segments 31 are evenly spaced apart and arranged into a ring so as to surround shaft 21. In the embodiment, commutator 30 includes 12 commutator segments 31.

As illustrated in FIG. 1, commutator segments 31 extend in the longitudinal direction of shaft 21. Commutator segments 31 are conductive terminals made of a metal material, such as copper, and are electrically connected to winding coils 22 of rotor 20. As an example, commutator 30 is a mold commutator, and commutator segments 31 are resin-molded. In this case, commutator segments 31 are embedded in mold resin 32 so that the surfaces of commutator segments 31 are exposed. It should be noted that commutator segments 31 may be electrically connected to each other by voltage equalization lines so as to have the same electric potential (equal voltage).

Conducting brushes 40 and auxiliary brushes 50 are in contact with commutator 30. Specifically, conducting brushes 40 and auxiliary brushes 50 are in slidable contact with commutator segments 31 of commutator 30. Although not illustrated, conducting brushes 40 and auxiliary brushes 50 are held by brush holders. For instance, each of conducting brushes 40 and auxiliary brushes 50 is housed in a brush holder. In this case, conducting brushes 40 and auxiliary brushes 50 are slidable inside the respective brush holders. Although not illustrated, electric motor 1 includes brush springs, such as coil springs or torsion springs, for pressing conducting brushes 40 and auxiliary brushes 50 against commutator 30. Using spring elasticity, the brush springs apply pressing force to conducting brushes 40 and auxiliary brushes 50. Conducting brushes 40 and auxiliary brushes 50 receive the pressing force, and thus the surface of an end of each brush is constantly in contact with commutator segment 31 of commutator 30. The surfaces on which each of conducting brushes 40 and auxiliary brushes 50 comes into contact with each of commutator segments 31 serve as sliding surfaces. It should be noted that the brush springs are provided, one for each of conducting brushes 40 and auxiliary brushes 50. However, the number of brush springs is not limited to the example.

Conducting brushes 40 and auxiliary brushes 50 are electric conductors having conductivity. As an example, conducting brushes 40 and auxiliary brushes 50 are long, substantially cuboid-shaped carbon brushes. Specifically, conducting brushes 40 and auxiliary brushes 50 are carbon brushes containing metal, such as copper. For instance, graphite powder, copper powder, binder resin, and a curative agent are kneaded, and a kneaded object is ground and compression-molded into cuboids, which are then baked to form conducting brushes 40 and auxiliary brushes 50. In this case, conducting brushes 40 and auxiliary brushes 50 may be metal-graphite brushes containing a high percentage of metal components, such as copper (e.g., the metal components account for 30% while carbon components account for 70%). Alternatively, conducting brushes 40 and auxiliary brushes 50 may be resin brushes in which resin properties, such as rubber elasticity, remain (e.g., resin components account for 20% while carbon components account for 80%).

Conducting brushes 40 are power-supply brushes that supply power to rotor 20 by coming into contact with commutator 30. Specifically, an end of conducting brush 40 comes into contact with commutator segment 31 of commutator 30. Conducting brush 40 is connected to an electrical wire through which a current supplied by power source 70 flows. For instance, conducting brush 40 is electrically connected to an electrode terminal that receives power from power source 70, via an electrical wire, such as a pigtail wire. Specifically, one of the end portions of the pigtail wire is connected to the electrode terminal, and the other end portion is connected to the trailing end portion of conducting brush 40. When conducting brush 40 comes into contact with commutator segments 31, an armature current supplied to conducting brush 40 through the pigtail wire flows through commutator segments 31, which then flows through winding coils 22 of rotor 20.

A state in which conducting brush 40 extends over and is in contact with two adjacent commutator segments 31 is possible. That is, the width of conducting brush 40 in the direction of rotation of rotor 20 is greater than a gap between two adjacent commutator segments 31. This enables conducting brush 40 to short-circuit winding coil 22 connected between two adjacent commutator segments 31.

For instance, as illustrated in (a) in FIG. 3, conducting brush 40 is in contact with two adjacent commutator segments 31. This state changes with rotation of commutator 30 caused by rotation of rotor 20. As illustrated in (b) in FIG. 3, conducting brush 40 has separated from one of two adjacent commutator segments 31 and is in contact with only the other of two adjacent commutator segments 31 that is behind the one of two adjacent commutator segments 31 in the direction of rotation. Thus, it is possible to short-circuit winding coil 22 installed in a wire path between two adjacent commutator segments 31.

As illustrated in FIG. 2, more than one conducting brush 40 is provided in the embodiment. Each conducting brush 40 is in contact with commutator 30. Specifically, more than one conducting brush 40 includes first conducting brush 41 and second conducting brush 42 as a pair of conducting brushes 40. First conducting brush 41 and second conducting brush 42 face each other, sandwiching commutator 30. That is, first conducting brush 41 and second conducting brush 42 are disposed so as to be symmetric with respect to shaft axis C of shaft 21. First conducting brush 41 and second conducting brush 42 are in contact with commutator segments 31 of commutator 30 in a direction perpendicular to shaft axis C of shaft 21 (radial direction). First conducting brush 41 and second conducting brush 42 are connected to power source 70. In the embodiment, power source 70 is a direct-current power source. As an example, first conducting brush 41 is an anode-side brush, and second conducting brush 42 is a cathode-side brush.

Auxiliary brush 50 is a spark-suppressing brush for suppressing a spark that has occurred due to separation of conducting brush 40 and commutator segment 31. In the embodiment, auxiliary brush 50 is not connected to the electrical wire through which a current supplied by power source 70 flows. That is, a current supplied by power source 70 does not directly flow through auxiliary brush 50. Instead, a portion of a current supplied by power source 70 flows through auxiliary brush 50 after flowing through conducting brush 40 and commutator segments 31.

As in the case of conducting brush 40, a state in which auxiliary brush 50 extends over and is in contact with two adjacent commutator segments 31 is possible. That is, the width of auxiliary brush 50 in the direction of rotation of rotor 20 is greater than a gap between two adjacent commutator segments 31. Thus, it is possible to short-circuit winding coil 22 provided between two adjacent commutator segments 31.

In the embodiment, more than one auxiliary brush 50 is provided. Each auxiliary brush 50 is in contact with commutator 30. Specifically, more than one auxiliary brush 50 includes first auxiliary brush 51 and second auxiliary brush 52 as a pair of auxiliary brush 50. First auxiliary brush 51 and second auxiliary brush 52 are in contact with commutator 30.

First auxiliary brush 51 and second auxiliary brush 52 are electrically connected to each other via diode 80. That is, diode 80 is inserted in a wire path between first auxiliary brush 51 and second auxiliary brush 52. Specifically, one of the terminals of diode 80 is connected to first auxiliary brush 51, and the other terminal is connected to second auxiliary brush 52. First auxiliary brush 51 and second auxiliary brush 52 are connected to diode 80 by a wire, such as a conducting wire.

First auxiliary brush 51 is disposed so that when first conducting brush 41 separates from one of commutator segments 31, first auxiliary brush 51 comes into contact with at least two commutator segments 31 including the one of commutator segments 31 and at least one commutator segment 31 behind the one of commutator segments 31 in the direction of rotation of rotor 20.

In the embodiment, first auxiliary brush 51 is disposed so as to extend over at least two commutator segments 31 that come into contact with first auxiliary brush 51 when first conducting brush 41 separates from one of commutator segments 31. In this case, at least two commutator segments 31 that come into contact with first auxiliary brush 51 are two adjacent commutator segments 31.

That is, in the embodiment, first auxiliary brush 51 is disposed so as to come into contact with and extend over commutator segment 31 just separated from first conducting brush 41 among commutator segments 31 (that is, commutator segment 31 in which a spark may occur due to separation from first conducting brush 41) and commutator segment 31 adjacent to commutator segment 31 just separated from first conducting brush 41.

Likewise, second auxiliary brush 52 is disposed so that when second conducting brush 42 separates from another commutator segment 31 among commutator segments 31 (commutator segment 31 different from commutator segment 31 from which first conducting brush 41 separates), second auxiliary brush 52 comes into contact with at least two commutator segments 31 including another commutator segment 31 and at least one commutator segment 31 behind another commutator segment 31 in the direction of rotation of rotor 20.

In the embodiment, second auxiliary brush 52 is disposed so as to extend over at least two commutator segments 31 that come into contact with second auxiliary brush 52 when second conducting brush 42 separates from another commutator segment 31 among commutator segments 31 (commutator segment 31 different from commutator segment 31 from which first conducting brush 41 separates). In this case, at least two commutator segments 31 that come into contact with second auxiliary brush 52 are two adjacent commutator segments 31.

That is, in the embodiment, as in the case of first auxiliary brush 51, second auxiliary brush 52 is disposed so as to come into contact with and extend over commutator segment 31 just separated from second conducting brush 42 among commutator segments 31 (that is, commutator segment 31 in which a spark may occur due to separation from second conducting brush 42) and commutator segment 31 adjacent to commutator segment 31 just separated from second conducting brush 42.

It should be noted that conducting brushes 40 and auxiliary brushes 50 are positioned on the same plane. Specifically, conducting brushes 40 and auxiliary brushes 50 are positioned on the same plane perpendicular to the direction of shaft axis C of shaft 21. In the embodiment, first conducting brush 41, second conducting brush 42, first auxiliary brush 51, and second auxiliary brush 52 are positioned on the same plane inside frame 60 without being at different positions in the direction of shaft axis C of shaft 21.

Next, advantageous effects of electric motor 1 according to the embodiment are described based on comparison with electric motor 1X in a comparative example. FIG. 4 is a cross-sectional view of electric motor 1X in the comparative example cut by a plane passing through conducting brushes 40 and auxiliary brushes 50.

Electric motor 1X in the comparative example illustrated in FIG. 4 and electric motor 1 according to the embodiment are different only in terms of where auxiliary brushes 50 are disposed. Specifically, in electric motor 1X in the comparative example, auxiliary brush 50 is disposed so as to come into contact with only commutator segment 31 just separated from conducting brush 40 among commutator segments 31 (that is, commutator segment 31 in which a spark may occur due to separation from conducting brush 40).

However, it is difficult to apply the arrangement of electric motor 1X in the comparative example illustrated in FIG. 4 to an electric motor operated at a high input voltage and having many commutator segments. For instance, as in the case of electric motor 1X in the comparative example illustrated in FIG. 4, if a pair of auxiliary brushes 50 including first auxiliary brush 51 and second auxiliary brush 52 are provided and diode 80 is connected between first auxiliary brush 51 and second auxiliary brush 52, the following condition should be met: before a spark occurs, arc voltage (e.g., for a metal-graphite brush, about 15 V) > electric potential difference between first auxiliary brush 51 and second auxiliary brush 52.

The electric potential difference between first auxiliary brush 51 and second auxiliary brush 52 is expressed as: power-supply voltage (input voltage) - 2 × voltage between adjacent commutator segments. Thus, for instance, in electric motor 1X in the comparative example illustrated in FIG. 4, since a total of 12 commutator segments 31 are provided, if power source 70 has a voltage of 25 V, the electric potential difference between first auxiliary brush 51 and second auxiliary brush 52 equals to 16.7 V. Thus, in electric motor 1X in the comparative example illustrated in FIG. 4, it may be difficult to absorb arc voltage due to sparking.

Accordingly, in an electric motor operated at a high input voltage and having many commutator segments, it is difficult to suppress a spark and extend the lifespan of a conducting brush.

In view of this, through diligent research, the inventors of the present application found that even if an electric motor is operated at a high input voltage and has many commutator segments, it is possible to effectively absorb arc voltage due to sparking by disposing a pair of auxiliary brushes connected to a diode at certain positions.

Specifically, in electric motor 1 according to the embodiment, first auxiliary brush 51 and second auxiliary brush 52 are electrically connected to each other via diode 80. First auxiliary brush 51 is disposed so that when first conducting brush 41 separates from one of commutator segments 31, first auxiliary brush 51 comes into contact with at least two commutator segments 31 including the one of commutator segments 31 and at least one commutator segment 31 behind the one of commutator segments 31 in the direction of rotation of rotor 20. Second auxiliary brush 52 is disposed so that when second conducting brush 42 separates from another commutator segment 31 among commutator segments 31 (commutator segment 31 different from commutator segment 31 from which first conducting brush 41 separates), second auxiliary brush 52 comes into contact with at least two commutator segments 31 including another commutator segment 31 and at least one commutator segment 31 behind another commutator segment 31 in the direction of rotation of rotor 20.

That is, when a spark occurs due to separation of first conducting brush 41 (second conducting brush 42) and commutator segment 31, first auxiliary brush 51 (second auxiliary brush 52) extends over and is in contact with more than one commutator segment 31.

In the arrangement, it is possible that the electric potential difference between first auxiliary brush 51 and second auxiliary brush 52 is less than or equal to arc voltage immediately before the spark occurs. For instance, in electric motor 1 according to the embodiment illustrated in FIG. 2, a total of 12 commutator segments 31 are provided, and each of first auxiliary brush 51 and second auxiliary brush 52 extends over two commutator segments 31. Thus, if power source 70 has a voltage of 25 V, the electric potential difference between first auxiliary brush 51 and second auxiliary brush 52 equals to 12.6 V, which is smaller than the electric potential difference between first auxiliary brush 51 and second auxiliary brush 52 in electric motor 1X in the comparative example illustrated in FIG. 4. Accordingly, it is possible to meet the condition: before a spark occurs, arc voltage (e.g., for a metal-graphite brush, about 15 V) > electric potential difference between first auxiliary brush 51 and second auxiliary brush 52.

For instance, if first auxiliary brush 51 and second auxiliary brush 52 are metal-graphite brushes, when first conducting brush 41 and second conducting brush 42 simultaneously separate from one of commutator segments 31 and another commutator segment 31, respectively, it is preferable that the electric potential difference between first auxiliary brush 51 and second auxiliary brush 52 be a voltage less than or equal to 10 V.

In addition, if first auxiliary brush 51 and second auxiliary brush 52 are resin brushes, when first conducting brush 41 and second conducting brush 42 simultaneously separate from one of commutator segments 31 and another commutator segment 31, respectively, it is preferable that the electric potential difference between first auxiliary brush 51 and second auxiliary brush 52 be a voltage less than or equal to 15 V.

Thus, in electric motor 1 according to the embodiment, even if the input voltage is high (e.g., a voltage greater than or equal to 20 V) and many commutator segments 31 are provided, it is possible to effectively suppress a spark that has occurred between conducting brush 40 and commutator segment 31, by using the pair of auxiliary brushes 50 electrically connected to each other via diode 80. Accordingly, it is possible to make a high-output, long-lifespan electric motor.

In addition, in electric motor 1 according to the embodiment, first auxiliary brush 51 is disposed so as to extend over at least two commutator segments 31 that come into contact with first auxiliary brush 51 when first conducting brush 41 separates from one of commutator segments 31. Second auxiliary brush 52 is disposed so as to extend over at least two commutator segments 31 that come into contact with second auxiliary brush 52 when second conducting brush 42 separates from another commutator segment 31 among commutator segments 31 (commutator segment 31 different from commutator segment 31 from which first conducting brush 41 separates). That is, first auxiliary brush 51 formed as one object extends over and is in contact with more than one commutator segment 31, and second auxiliary brush 52 formed as one object extends over and is in contact with more than one commutator segment 31.

Thus, in a simple (not complex) arrangement of first auxiliary brush 51 and second auxiliary brush 52, it is possible to cause one auxiliary brush 50 to come into contact with more than one commutator segment 31 at the same time.

In electric motor 1 according to the embodiment, at least two commutator segments 31 that come into contact with first auxiliary brush 51 when first conducting brush 41 separates from one of commutator segments 31 are two adjacent commutator segments 31. Likewise, at least two commutator segments 31 that come into contact with second auxiliary brush 52 when second conducting brush 42 separates from another commutator segment 31 among commutator segments 31 are two adjacent commutator segments 31. That is, each of first auxiliary brush 51 and second auxiliary brush 52 extends over two adjacent commutator segments 31.

Thus, it is possible to effectively suppress a spark without making first auxiliary brush 51 and second auxiliary brush 52 not too large.

### (Variations)

In electric motor 1 according to the present disclosure is described above on the basis of the embodiment. However, the present disclosure is not limited to the descriptions in the above embodiment.

For instance, in the embodiment, commutator segments 31 that come into contact with first auxiliary brush 51 when first conducting brush 41 separates from commutator segment 31 are two adjacent commutator segments 31. However, the number is not limited to the example. Likewise, commutator segments 31 that come into contact with second auxiliary brush 52 when second conducting brush 42 separates from commutator segment 31 are two adjacent commutator segments 31. However, the number is not limited to the example.

Specifically, as in the case of electric motor 1A according to Variation 1 illustrated in FIG. 5, commutator segments 31 that come into contact with first auxiliary brush 51A when first conducting brush 41 separates from commutator segment 31 may be three consecutive commutator segments 31. In addition, commutator segments 31 that come into contact with second auxiliary brush 52A when second conducting brush 42 separates from commutator segment 31 may be three consecutive commutator segments 31. That is, first auxiliary brush 51A formed as one object may extend over and be in contact with three commutator segments 31, and second auxiliary brush 52A formed as one object may extend over and be in contact with three commutator segments 31. It should be noted that commutator segments 31 in contact with first auxiliary brush 51A (second auxiliary brush 52A) are not limited to three commutator segments 31, and may be three or more commutator segments 31.

In the embodiment, one first auxiliary brush 51 comes into contact with and extends over more than one commutator segment 31, and one second auxiliary brush 52 comes into contact with and extends over more than one commutator segment 31. However, the arrangement is not limited to the example. Specifically, as in the case of electric motor 1B in FIG. 6, first auxiliary brushes 51B may make a pair of brushes electrically connected to and isolated from each other, and second auxiliary brushes 52B may make a pair of brushes electrically connected to and isolated from each other.

In the arrangement, although the total number of auxiliary brushes 50 increases, it is possible to decrease contact areas between each of auxiliary brushes 50 and commutator segment(s) 31. Thus, it is possible to reduce sliding loss between auxiliary brush 50 and commutator segment 31. It should be noted in FIG. 6, each of first auxiliary brush 51 and second auxiliary brush 52 is split into two brushes. However, each of first auxiliary brush 51 and second auxiliary brush 52 may be split into three or more brushes. One of first auxiliary brush 51 and second auxiliary brush 52 may be split into more than one brush.

In addition, in electric motor 1B according to Variation 2 in FIG. 6, it is preferable that at least one commutator segment 31 be present between at least two commutator segments 31 that come into contact with first auxiliary brushes 51 when first conducting brush 41 separates from one of commutator segments 31. Likewise, it is preferable that at least one commutator segment 31 be present between at least two commutator segments 31 that come into contact with second auxiliary brushes 52 when second conducting brush 42 separates from another commutator segment 31 among commutator segments 31 (commutator segment 31 different from commutator segment 31 from which first conducting brush 41 separates). It should be noted that in FIG. 6, one commutator segment 31 is present between two commutator segments 31 in contact with first auxiliary brushes 51, and one commutator segment 31 is present between two commutator segments 31 in contact with second auxiliary brushes 52.

In the embodiment, stator 10 is made up of magnets 11. However, the configuration of stator 10 is not limited to the example. For instance, stator 10 may have a stator core and winding coils wound around the stator core.

In the embodiment, rotor 20 has a core. However, rotor 20 does not have to have a core. That is, electric motor 1 in the embodiment is also applicable to a coreless motor, or a motor without a core. For instance, electric motor 1 in the embodiment is applicable to a coreless motor that is a flat motor in which the magnetic flux of stator 10 and the magnetic flux of rotor 20 are generated in the direction of shaft axis C of shaft 21.

The present disclosure includes an embodiment obtained by making various changes envisioned by those skilled in the art to the above embodiment and an embodiment obtained by optionally combining the structural elements and functions thereof in the embodiment within the scope of the present disclosure.

### [Industrial Applicability]

The present disclosure is applicable to various products including an electric motor, such as a vacuum cleaner and an automobile.

### [Reference Signs List]

- 1, 1A, 1B: electric motor
- 10: stator
- 11: magnet
- 20: rotor
- 21: shaft
- 21a: first end portion
- 21b: second end portion
- 22: winding coil
- 23: rotor core
- 24: insulator
- 30: commutator
- 31: commutator segment
- 32: mold resin
- 40: conducting brush
- 41: first conducting brush
- 42: second conducting brush
- 50: auxiliary brush
- 51, 51A, 51B: first auxiliary brush
- 52, 52A, 52B: second auxiliary brush
- 60: frame
- 70: power source
- 80: diode

## Claims

1. An electric motor, comprising:
a rotor having a rotation shaft;
a commutator attached to the rotation shaft;
a plurality of conducting brushes in contact with the commutator; and
a plurality of auxiliary brushes in contact with the commutator,
wherein the commutator includes a plurality of commutator segments provided in a circumferential direction of the rotation shaft,
the plurality of conducting brushes include a first conducting brush and a second conducting brush,
the plurality of auxiliary brushes include a first auxiliary brush and a second auxiliary brush,
the first auxiliary brush and the second auxiliary brush are electrically connected to each other via a diode,
the first auxiliary brush is disposed so that when the first conducting brush separates from one of the plurality of commutator segments, the first auxiliary brush comes into contact with at least two commutator segments including the one of the plurality of commutator segments and at least one commutator segment behind the one of the plurality of commutator segments in a direction of rotation of the rotor, and
the second auxiliary brush is disposed so that when the second conducting brush separates from an other commutator segment among the plurality of commutator segments, the second auxiliary brush comes into contact with at least two commutator segments including the other commutator segment and at least one commutator segment behind the other commutator segment in the direction of rotation of the rotor.

2. The electric motor according to claim 1,
wherein the first auxiliary brush and the second auxiliary brush are metal-graphite brushes, and
when the first conducting brush and the second conducting brush simultaneously separate from the one of the plurality of commutator segments and the other commutator segment, respectively, an electric potential difference between the first auxiliary brush and the second auxiliary brush is less than or equal to 10 volts.

3. The electric motor according to claim 1,
wherein the first auxiliary brush and the second auxiliary brush are resin brushes, and
when the first conducting brush and the second conducting brush simultaneously separate from the one of the plurality of commutator segments and the other commutator segment, respectively, an electric potential difference between the first auxiliary brush and the second auxiliary brush is less than or equal to 15 volts.

4. The electric motor according to any one of claims 1 to 3,
wherein the first auxiliary brush is disposed so as to extend over the at least two commutator segments that come into contact with the first auxiliary brush when the first conducting brush separates from the one of the plurality of commutator segments, and
the second auxiliary brush is disposed so as to extend over the at least two commutator segments that come into contact with the second auxiliary brush when the second conducting brush separates from the other commutator segment.

5. The electric motor according to claim 4,
wherein the at least two commutator segments that come into contact with the first auxiliary brush when the first conducting brush separates from the one of the plurality of commutator segments are two adjacent commutator segments, and
the at least two commutator segments that come into contact with the second auxiliary brush when the second conducting brush separates from the other commutator segment are two adjacent commutator segments.

6. The electric motor according to claim 4,
wherein the at least two commutator segments that come into contact with the first auxiliary brush when the first conducting brush separates from the one of the plurality of commutator segments are three or more consecutive commutator segments, and
the at least two commutator segments that come into contact with the second auxiliary brush when the second conducting brush separates from the other commutator segment are three or more consecutive commutator segments.

7. The electric motor according to any one of claims 1 to 3,
wherein the first auxiliary brush includes a pair of brushes electrically connected to and isolated from each other, and
the second auxiliary brush includes a pair of brushes electrically connected to and isolated from each other.

8. The electric motor according to claim 7,
wherein at least one commutator segment is present between the at least two commutator segments that come into contact with the first auxiliary brush when the first conducting brush separates from the one of the plurality of commutator segments, and
at least one commutator segment is present between the at least two commutator segments that come into contact with the second auxiliary brush when the second conducting brush separates from the other commutator segment.

9. Electrical equipment comprising the electric motor according to any one of claims 1 to 7.
